# EUROPEAN PATENT APPLICATION

(11) **EP 4 239 729 A1**
(43) Date of publication of application: **06.09.2023**
(21) Application number: 22880078.5
(22) Date of filing: 14.09.2022
(51) Int. Cl.: H01M 4/62

(54) **ELECTRODE PLATE AND PREPARATION METHOD THEREFOR**

(30) Priority: 12.10.2021 CN 202111186045
(71) Applicant: Contemporary Amperex Technology Co., Limited, Ningde, Fujian 352100 (CN)
(72) Inventor: LIN, Jianghui, Ningde, Fujian 352100 (CN); ZHAO, Yanjie, Ningde, Fujian 352100 (CN); LI, Xing, Ningde, Fujian 352100 (CN); JIN, Haizu, Ningde, Fujian 352100 (CN)
(74) Representative: Gong, Jinping
(86) International application number: PCT/CN2022/118742
(87) International publication number: WO 2023/061136

(57) **Abstract**

This application provides an electrode plate and a method for preparing same. The electrode plate according to this application includes a current collector and an electrode material layer disposed on at least one surface of the current collector. The electrode material layer includes an active material and optionally a conductive agent. The electrode material layer includes a compound represented by Formula (I). The electrode plate according to this application is characterized by a relatively high porosity, more uniform distribution of pores, a more noticeable effect of being initially infiltrated by an electrolytic solution, a higher capacity of retaining the electrolytic solution, alleviated initial polarization, and a reduced direct-current resistance (DCR), and therefore, can improve the performance of a battery that contains the electrode plate.

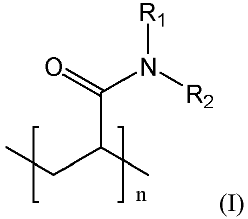

## Description

### TECHNICAL FIELD

This application relates to the technical field of lithium batteries, and in particular, to an electrode plate and a method for preparing same, a secondary battery, a battery module, a battery pack, and an electrical device.

### BACKGROUND

As a high-performance secondary battery, a lithium-ion battery is widely used in many fields by virtue of a long cycle life, environmental friendliness, and other characteristics. It is a common quest to obtain lithium-ion batteries of higher performance.

In an existing electrode plate, the porosity is low, and the distribution of pores is nonuniform, thereby being adverse to being infiltrated by an electrolytic solution. Consequently, the amount of retained electrolytic solution is insufficient, thereby intensifying polarization of the electrode plate and further leading to unsatisfactory performance of the battery.

To solve the above problem, pores are made in the electrode plate in many ways in the prior art. However, the porosity, pore distribution, and the like of the resultant electrode plate are still not satisfactory enough, and the pore-making process is accompanied by problems such as pollution, corrosion, and high cost.

Therefore, there is an urgent need in the art to develop an electrode plate characterized by a higher porosity and uniform distribution of pores.

### SUMMARY

This application is put forward in view of the foregoing problems, and an objective of this application is to provide an electrode plate characterized by a high porosity and uniform distribution of pores.

To achieve the above objective, this application provides an electrode plate. The electrode plate includes a current collector and an electrode material layer disposed on at least one surface of the current collector. The electrode material layer includes an active material and a conductive agent. The electrode material layer further includes a compound represented by Formula (I):

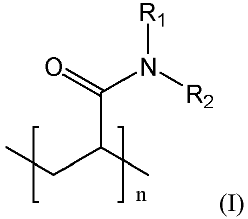

In the formula above, R₁ and R₂ each are independently selected from hydrogen, a C₁ to C₆ alkane group, a C₁ to C₆ chain alkoxy group, a C₂ to C₆ alkenyl group, a C₆ to C₂₀ aryl, a hydroxyl group, or an amino group, where the alkane group, the chain alkoxy group, the alkenyl group, and the aryl group each are independently optionally substituted by at least one of the following groups: a C₁ to C₃ alkyl group, a C₁ to C₆ alkyl hydroxyl group, a hydroxyl group, an amino group, an amido group, a cyano group, a carboxyl group, and halogen; and n is an integer ranging from 50 to 10000.

In this way, this application provides an electrode plate characterized by a relatively high porosity and more uniform distribution of pores. In addition, in the electrode plate according to this application, the effect of being initially infiltrated by an electrolytic solution is more noticeable, the capacity of retaining the electrolytic solution is higher, the initial polarization is alleviated, and the direct-current resistance (DCR) is reduced.

In any embodiment, in Formula (I), R₁ and R₂ each are independently selected from hydrogen, a C₁ to C₆ alkane group, a C₂ to C₆ alkenyl group, or a phenyl group, where the alkane group, the alkenyl group, and the phenyl group each are independently optionally substituted by at least one of the following groups: a C₁ to C₃ alkyl group, a hydroxyl group, or an amino group; optionally, R₁ is selected from a C₁ to C₆ alkane group, an unsubstituted C₁ to C₆ alkenyl group, or a phenyl group, and the alkane group and the phenyl group each are independently optionally substituted by a C₁ to C₃ alkyl or a hydroxy group; and further optionally, R₁ is selected from an ethyl group, an isopropyl group, an allyl group, a hydroxymethyl group, or a p-hydroxyphenyl group; and R₂ is hydrogen.

In any embodiment, in Formula (I), n is an integer ranging from 75 to 5000, and optionally, n is an integer ranging from 100 to 2000.

In the above technical solution, by further selecting each group and the number n of polymerized units in Formula (I), this application can further improve pore structure characteristics (such as porosity and distribution uniformity) of the electrode plate, and can further improve the capabilities of the electrode plate in "capturing" and retaining the electrolytic solution, alleviate initial polarization, reduce the DCR, and the like.

In any embodiment, the electrode material layer includes a compound represented by Formula (I) at a weight percent of 0.1 wt% to 20 wt%, and optionally 0.2 wt% to 10 wt%, based on a total weight of the electrode material layer. The electrode plate containing the compound represented by Formula (I) at the above weight percent achieves a more noticeable effect in being infiltrated by the electrolytic solution.

In any embodiment, the electrode plate is a negative electrode plate.

In any embodiment, the active material is at least one selected from the following materials: artificial graphite, natural graphite, soft carbon, hard carbon, silicon-based material, tin-based material, and lithium titanium oxide.

By selecting the negative active material, this application further enhances the performance of the negative electrode plate.

A second aspect of this application provides a method for preparing an electrode plate, including:
(1) dry-mixing an active material, a conductive agent, and a compound represented by Formula (I) to form a dry mixture, and mixing the dry mixture with water and a binder at a first temperature lower than 35 °C to obtain an electrode material slurry, 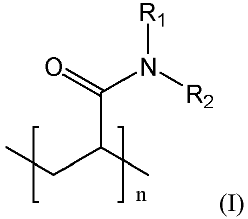 where, R₁, R₂, and n are as defined above; and
(2) applying the electrode material slurry onto at least one surface of a current collector, and drying the slurry to obtain an electrode plate.

The above technical solution provides a method for manufacturing an electrode plate according to this application. By using the compound represented by Formula (I) as a pore-forming agent, this application improves the porosity, uniformity, and consistency of pores in the electrode plate, and improves the performance of the electrode plate in being infiltrated by the electrolytic solution and the performance of retaining the electrolytic solution, thereby improving the cycle performance of the electrode plate and a battery containing the electrode plate.

In any embodiment, a solid content of the electrode material slurry is 40 wt% to 70 wt%, optionally 40 wt% to 65 wt%, and further optionally 45 wt% to 60 wt%, based on a total weight of the electrode material slurry.

In the method for preparing an electrode plate according to this application, the pore-forming effect can be controlled and improved by controlling the solid content of the slurry.

The pore-forming effect can be controlled and improved by controlling the weight percent of the pore-forming agent compound represented by Formula (I).

In any embodiment, the first temperature is 20 °C to 30 °C, optionally 22 °C to 28 °C, and further optionally 25 °C. With the first temperature falling within such a range, the compound represented by Formula (I) can be dissolved in a solvent (such as water) during preparation of the slurry, so as to achieve a more desirable pore-forming effect.

In any embodiment, the drying is performed at a temperature higher than 45 °C, optionally at 90 °C to 150 °C, further optionally at 115 °C to 145 °C, and desirably at 125 °C to 135 °C. With the drying temperature falling within the above range, a desirable drying speed is achieved. The desired pore-forming process is implemented while the production efficiency is satisfactory. The resultant electrode plate is more structurally stable, and the pores in the electrode plate are more uniform, so that the performance of the electrode plate is higher.

In any embodiment, the water is deionized water. Further, the deionized water selected can reduce the residue of impurities in the electrode plate and prevent the residue of impurities from adversely affecting the electrochemical performance of the electrode plate.

In any embodiment, the electrode plate is a negative electrode plate.

In any embodiment, the active material is at least one selected from the following materials: artificial graphite, natural graphite, soft carbon, hard carbon, silicon-based material, tin-based material, and lithium titanium oxide. By further selecting the negative active material, this application further enhances the performance of the negative electrode plate.

A third aspect of this application provides a use of a compound represented by Formula (I) as a pore-forming agent:

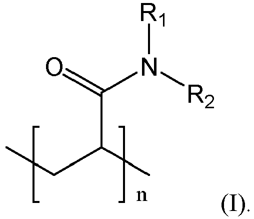

In the formula above, R₁, R₂, and n are as defined above.

In the above technical solution, this application provides a use of a compound represented by Formula (I) as a pore-forming agent. When the compound is used as a pore-forming agent, the operation is simple, the process is environmentally friendly, the resultant porosity is high, and the pores are distributed uniformly.

In any embodiment, the pore-forming agent is configured to form pores in the electrode material layer of the electrode plate.

In any embodiment, the electrode plate is a negative electrode plate.

When the compound represented by Formula (I) is used as a pore-forming agent to make pores in the electrode plate of a battery, the porosity and the uniformity of pore distribution are improved. In addition, the pore-forming agent is retained in the electrode plate, and therefore, can improve the performance of the electrode plate in being infiltrated by the electrolytic solution, improve the performance of the electrode plate in retaining the electrolytic solution, and in turn, improve the cycle performance of the electrode plate and the battery.

A fourth aspect of this application provides a secondary battery. The secondary battery includes the electrode plate according to the first aspect of this application or an electrode plate prepared by the preparation method according to the second aspect of this application.

A fifth aspect of this application provides a battery module. The battery module includes the secondary battery according to the fourth aspect of this application.

A sixth aspect of this application provides a battery pack. The battery pack includes the battery module according to the fifth aspect of this application.

A seventh aspect of this application provides an electrical device. The electrical device includes at least one of the secondary battery according to the fourth aspect of this application, the battery module according to the fifth aspect of this application, or the battery pack according to the sixth aspect of this application.

The electrode plate provided in this application achieves at least one of the following effects: a high porosity, uniform distribution of pores, good effect of being infiltrated by the electrolytic solution, high capacity of retaining the electrolytic solution, a low degree of initial polarization, a low internal resistance, and high cycle performance. Accordingly, the secondary battery, battery module, battery pack, and electrical device, each containing the electrode plate according to this application, achieve improved cycle performance.

### BRIEF DESCRIPTION OF DRAWINGS

FIG. 1 is a schematic diagram of forming pores by a compound represented by Formula (I) according to this application;
FIG. 2 is a schematic diagram of how a compound represented by Formula (I) and retained in pores of an electrode plate swells after absorbing an electrolytic solution according to this application;
FIG. 3 is a scanning electron microscope image of a morphological cross-section of an electrode plate according to this application;
FIG. 4 is a schematic diagram of a secondary battery according to an embodiment of this application;
FIG. 5 is an exploded view of the secondary battery shown in FIG. 4 according to an embodiment of this application;
FIG. 6 is a schematic diagram of a battery module according to an embodiment of this application;
FIG. 7 is a schematic diagram of a battery pack according to an embodiment of this application;
FIG. 8 is an exploded view of the battery pack shown in FIG. 7 according to an embodiment of this application; and
FIG. 9 is a schematic diagram of an electrical device that uses a secondary battery as a power supply according to an embodiment of this application.

List of reference numerals:
1. battery pack; 2. upper box; 3. lower box; 4. battery module; 5. secondary battery; 51. housing; 52. electrode assembly; 53. top cap assembly.

### DETAILED DESCRIPTION OF EMBODIMENTS

The following describes in detail an electrode plate and a method for preparing same, a secondary battery, a battery module, a battery pack, and an electrical device according to this application. However, unnecessary details may be omitted in some cases. For example, a detailed description of a well-known matter or repeated description of an essentially identical structure may be omitted. That is intended to prevent the following descriptions from becoming unnecessarily lengthy, and to facilitate understanding by a person skilled in the art. In addition, the drawings and the following descriptions are intended for a person skilled in the art to thoroughly understand this application, but not intended to limit the subject-matter set forth in the claims.

A "range" disclosed herein is defined in the form of a lower limit and an upper limit. A given range is defined by a lower limit and an upper limit selected. The selected lower and upper limits define the boundaries of a particular range. A range so defined may be inclusive or exclusive of the end values, and a lower limit of one range may be arbitrarily combined with an upper limit of another range to form a range. For example, if a given parameter falls within a range of 60 to 120 and a range of 80 to 110, it is expectable that the parameter may fall within a range of 60 to 110 and a range of 80 to 120 as well. In addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, a numerical range "0 to 5" herein means all real numbers recited between 0 and 5 inclusive, and the expression "0 to 5" is just a brief representation of a combination of such numbers. In addition, a statement that a parameter is an integer greater than or equal to 2 is equivalent to a disclosure that the parameter is an integer such as 2, 3, 4, 5, 6, 7, 8, 9, 10, 11, 12, and so on.

Unless otherwise expressly specified herein, any embodiments and optional embodiments hereof may be combined with each other to form a new technical solution.

Unless otherwise expressly specified herein, any technical features and optional technical features hereof may be combined with each other to form a new technical solution.

Unless otherwise expressly specified herein, all steps described herein may be performed in sequence or at random, and preferably in sequence. For example, that the method includes steps (a) and (b) indicates that the method may include steps (a) and (b) performed in sequence, or steps (b) and (a) performed in sequence. For example, that the method may further include step (c) indicates that step (c) may be added into the method in any order. For example, the method may include steps (a), (b), and (c), or may include steps (a), (c), and (b), or may include steps (c), (a), and (b), and so on.

Unless otherwise expressly specified herein, "include" and "comprise" mentioned herein mean open-ended inclusion, or closed-ended inclusion. For example, the terms "include" and "comprise" may mean inclusion of other items that are not recited, or inclusion of only the items recited.

Unless otherwise expressly specified herein, the term "or" is inclusive. For example, the expression "A or B" means "A alone, B alone, or both A and B". More specifically, any one of the following conditions satisfies the condition "A or B" : A is true (or existent) and B is false (or absent); A is false (or absent) and B is true (or existent); and, both A and B are true (or existent).

Due to a relatively low porosity and nonuniform distribution of pores, an electrode plate in the prior art does not facilitate electrolyte infiltration. Therefore, an active material at a remote end of the electrode plate (that is, a side closer to a current collector) can hardly exert a full capacity. In addition, after a battery cell expands in volume with the increase of the number of cycles of a lithium-ion secondary battery, the porosity of the electrode plate is further decreased. An electrolytic solution in the electrode plate is consumed and squeezed out. Consequently, the polarization of the electrode plate is intensified, and the cycle performance of the battery is unsatisfactory.

To solve the above problem, pores are made in the electrode plate in various ways in the prior art. The basic conception of the pore formation is to let a pore-forming agent occupy a space in the electrode plate during the preparation of the electrode plate, and remove the pore-forming agent after completion of pore formation, so as to obtain pores. The pore-forming agent is usually removed by applying a process such as a high-temperature or electrochemical process to decompose or volatilize the pore-forming agent into a gas to escape, or by dissolving the pore-forming agent in the electrolytic solution. The existing pore-forming methods increase the porosity to some extent, but bring many problems. For example, in this field, the pore-forming agent in the electrode plate is usually converted into a gas to escape through a high-temperature or electrochemical process. This pore-forming method is energy-consuming and costly. Moreover, the escape of the gas is uncontrollable, and therefore, the pore uniformity is not ensured. In additional, the gas may be corrosive and detrimental to equipment life and personnel health. For another example, if the pore-forming agent in the electrode plate is dissolved in the electrolytic solution to remove the pore-forming agent and implement pore formation, although some of the above problems are avoided and the operation is easy, the dissolution of the pore-forming agent will change the composition of the electrolytic solution, and may impair the battery performance.

Therefore, there is an urgent need in the art to develop an electrode plate of a higher porosity without incurring the above problems.

To increase the porosity of the electrode plate, the inventor hereof uses a compound represented by Formula (I) as a pore-forming agent. A molecule of the compound includes a hydrophobic group (such as R₁ and/or R₂) and an amido group as a hydrophilic group. The compound possesses a "temperature-sensitive" property: when the temperature is low, the compound can blend with a solvent (such as water) to form a hydrogen bond to dissolve in the solvent, exhibiting hydrophilicity; however, when the temperature rises to a specified level, the hydrogen bond breaks off, and the compound in turn becomes hydrophobic.

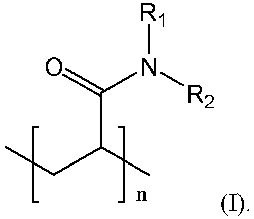

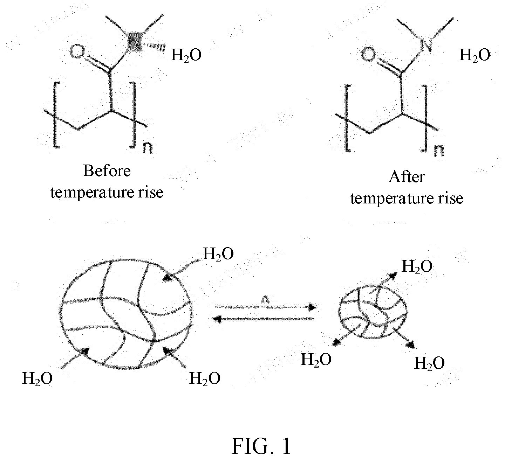

Although the underlying mechanism still remains unclear, the pore-forming process of the compound can be roughly understood with reference to FIG. 1. As shown in FIG. 1, during preparation of a slurry, the temperature is relatively low, and an amido group in a molecular chain of the compound exerts a strong hydrogen bonding effect on surrounding water molecules, so that the molecule of the compound is dissolved in water and evenly distributed in the slurry. Subsequently, the slurry is applied onto a current collector to form a wet (that is, not dried yet) electrode material layer. At this time, because the electrode plate remains undried, the molecular chain of the pore-forming agent is still soluble in water and assumes a stretched state, absorbs water and swells to a large size, and occupies a space in the electrode material layer. In a drying process, the temperature of the electrode material layer rises, the hydrogen bond between the pore-forming agent molecule and the solvent water breaks off, and the hydrophobic interaction between the molecular chains takes a dominant position. The molecular chains gradually shrink and concentrate from the stretched state assumed during dissolution, and eventually form compact colloidal particles. Such a transformation reduces the molecular volume of the compound by several times or even dozens of times. Therefore, pores are formed in the dry electrode plate, and the porosity is significantly increased.

The compound represented by Formula (I) can be uniformly distributed in the slurry and the resultant electrode material layer due to being soluble in water, the resultant pores are evenly distributed. Moreover, no additional energy-consuming step is required, no gas is generated, and the composition of the electrolytic solution is not changed during the pore formation, thus overcoming many disadvantages of the prior art.

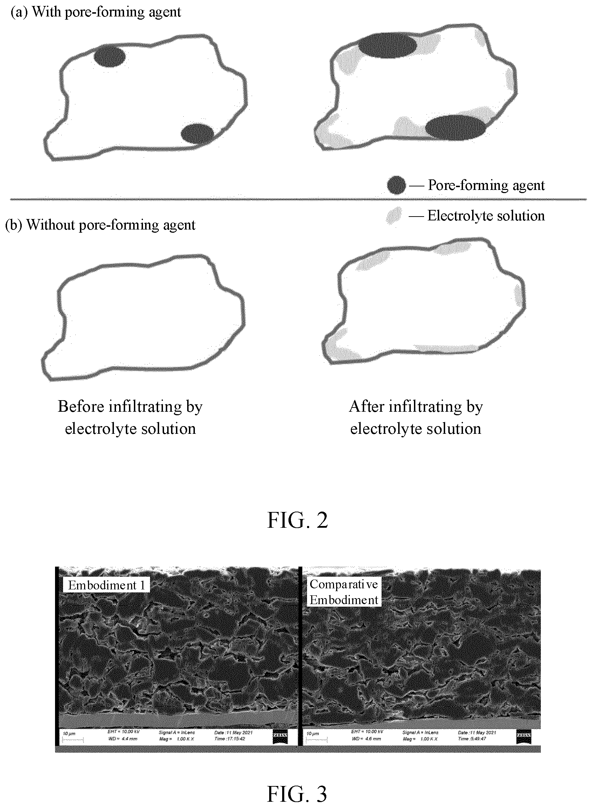

In addition, it is worth noting that the compound represented by Formula (I) as the pore-forming agent is not removed after completion of the pore formation, but remains in the pores of the electrode plate according to this application. The inventor hereof finds that the compound does not decompose or volatilize at a temperature below 200 °C. Although the underlying mechanism still remains unclear, the inventor has unexpectedly found that, when a freshly prepared electrode plate according to this application is infiltrated by the electrolytic solution, an affinity exists between the electrolytic solution and the compound represented by Formula (I) and existent in the pores of the electrode plate. Therefore, the compound can "capture" the electrolytic solution, thereby further improving the infiltration effect of the electrolytic solution, and alleviating the initial polarization of the electrode plate. In addition, the compound absorbs the electrolytic solution and swells after being infiltrated by the electrolytic solution (as shown in FIG. 2), thereby further increasing the amount of retained electrolytic solution after the electrode plate is cycled for a plurality of times, and in turn, alleviating the polarization of the electrode plate at a later stage of cycling and further improving the cycle performance of the battery.

By virtue of the pore-forming agent used in this application-the compound represented by Formula (I), the electrode plate according to this application achieves an increased porosity, improved infiltration effect of electrolytic solution, and improved cycle performance, thereby prolonging the service life.

The following describes this application in detail.

A first aspect of this application provides an electrode plate. The electrode plate includes a current collector and an electrode material layer disposed on at least one surface of the current collector. The electrode material layer includes an active material and a conductive agent. The electrode material layer includes a compound represented by Formula (I).

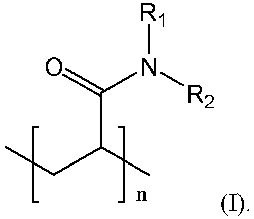

In the formula above, R₁ and R₂ each are independently selected from hydrogen, a C₁ to C₆ alkane group, a C₁ to C₆ chain alkoxy group, a C₂ to C₆ alkenyl group, a C₆ to C₂₀ aryl, a hydroxyl group, or an amino group, where the alkane group, the chain alkoxy group, the alkenyl group, and the aryl group each are independently optionally substituted by at least one of the following groups: a C₁ to C₃ alkyl group, a C₁ to C₆ alkyl hydroxyl group, a hydroxyl group, an amino group, an amido group, a cyano group, a carboxyl group, and halogen; and n is an integer ranging from 50 to 10000.

In this way, this application provides an electrode plate characterized by a relatively high porosity and more uniform distribution of pores. In addition, in the electrode plate according to this application, the effect of being initially infiltrated by an electrolytic solution is more noticeable, the capacity of retaining the electrolytic solution is higher, the initial polarization is alleviated, and the direct-current resistance (DCR) is reduced. Further, the battery containing the electrode plate achieves improved performance such as cycle performance and power performance.

As used herein, the term "power performance" means a percentage of useful work in the total work done by the battery during discharge. In other words, when the battery produces work during discharge, the electric work (for reasons such as heat generated by a resistor) is scarcely lost, and more useful work is output, that is, the power output is large. Therefore, understandably, in this application, the DCR of the electrode plate is relatively low, and accordingly, the power performance is relatively high.

In some embodiments, in Formula (I), R₁ and R₂ each are independently selected from hydrogen, a C₁ to C₆ alkane group, a C₂ to C₆ alkenyl group, or a phenyl, where the alkane group, the alkenyl group, and the phenyl each are independently optionally substituted by at least one of the following groups: a C₁ to C₃ alkyl group, a hydroxyl group, or an amino group; and R₂ is hydrogen.

In some embodiments, optionally, R₁ is selected from a C₁ to C₆ alkane group, an unsubstituted C₂ to C₆ alkenyl group, or a phenyl group. The alkane group and the phenyl group each are independently optionally substituted by a C₁ to C₃ alkyl or a hydroxy group. Further optionally, R₁ is selected from an ethyl group, an isopropyl group, an allyl group, a hydroxymethyl group, or a p-hydroxyphenyl group; and R₂ is hydrogen.

In some embodiments, in Formula (I), n is an integer ranging from 75 to 5000, and optionally, n is an integer ranging from 100 to 2000.

In the above technical solution, by further selecting each group and the number n of polymerized units in Formula (I), this application can further improve pore structure characteristics (such as porosity and distribution uniformity) of the electrode plate, and can further improve the capabilities of the electrode plate in "capturing" and retaining the electrolytic solution, alleviate initial polarization, reduce the DCR, and the like.

The inventor finds that the number n of polymerized units in the compound represented by Formula (I) affects the porosity and uniformity of pore distribution of the electrode plate. According to the above, the compound represented by Formula (I) makes pores by manipulating the volume change of the compound generated during heating. The number n of polymerized units of the compound represented by Formula (I) affects the volume change rate caused by the heating. By controlling the number n of polymerized units to fall within the above range, this application achieves an appropriate molecular weight of the compound represented by Formula (I). Therefore, the swollen volume of the dissolved product is appropriate (so as to generate pores of a desired size) while a good solubility is achieved, and the volume change rate is appropriate when the temperature rises, thereby achieving the pores that are improved in size, distribution uniformity, and consistency in the electrode plate.

In some embodiments, the electrode material layer includes a compound represented by Formula (I) at a weight percent of 0.1 wt% to 20 wt%, and optionally 0.2 wt% to 10 wt%, based on a total weight of the electrode material layer.

An infrared spectroscopy test may be carried out to demonstrate that the electrode material layer contains the compound represented by Formula (I). To carry out the test, powder is scraped off directly from the electrode material layer of the electrode plate under test, and is tested based on GB/T6040-2002 *General Rules for Infrared Analysis.* In an infrared spectrum of a specimen of the electrode plate containing the compound represented by Formula (I), a characteristic peak of the compound represented by Formula (I), such as an amide C=O stretching vibration peak, is seen at 1600 to 1700 cm⁻¹.

### Negative electrode plate

In some embodiments, the electrode plate is a negative electrode plate.

The negative electrode plate includes a negative current collector and a negative electrode material layer disposed on at least one surface of the negative current collector. The electrode material layer includes an active material and a conductive agent. The negative electrode material layer includes a compound represented by Formula (I) according to the first aspect of this application.

In some embodiments, the electrode material layer includes a compound represented by Formula (I) at a weight percent of 0.1 wt% to 20 wt%, and optionally 0.2 wt% to 10 wt%, based on a total weight of the electrode material layer.

As used herein, the term "total weight of the electrode material layer" means the total weight of all substances contained in the dried electrode material layer.

For example, the negative current collector includes two surfaces opposite to each other in a thickness direction thereof. The negative electrode material layer is disposed on either or both of the two opposite surfaces of the negative current collector.

In some embodiments, the negative current collector may be a metal foil or a composite current collector. For example, the metal foil may be a copper foil. The composite current collector may include a polymer material substrate and a metal layer formed on at least one surface of the polymer material substrate. The composite current collector may be formed by overlaying the polymer material substrate with a metal material (for example, copper, copper alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

In some embodiments, the negative active material may be a negative active material well known in the art for use in a battery. As an example, the negative active material may include at least one of the following materials: artificial graphite, natural graphite, soft carbon, hard carbon, silicon-based material, tin-based material, lithium titanium oxide, and the like. The silicon-based material may be at least one selected from simple-substance silicon, a silicon-oxygen compound, a silicon-carbon composite, a silicon-nitrogen composite, and a silicon alloy. The tin-based material may be at least one selected from simple-substance tin, tin-oxygen compound, or tin alloy. However, this application is not limited to such materials, and other conventional materials usable as a negative active material of a battery may be used instead. One of the negative active materials may be used alone, or at least two thereof may be used in combination. By selecting the negative active material, this application further enhances the performance of the negative electrode plate.

In some embodiments, the negative electrode material layer further optionally includes a binder. The binder may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), polymethyl acrylic acid (PMAA), and carboxymethyl chitosan (CMCS).

In some embodiments, the negative electrode material layer includes a conductive agent. The conductive agent may be at least one selected from superconductive carbon, acetylene black, carbon black, Ketjen black, carbon dots, carbon nanotubes, graphene, or carbon nanofibers.

In some embodiments, the negative electrode material layer further optionally includes other agents, such as a thickener (for example, sodium carboxymethyl cellulose (CMC-Na)).

In some embodiments, the negative electrode plate may be prepared according to the following method: dispersing the ingredients of the negative electrode plate such as the negative active material, the conductive agent, and the binder and any other ingredients in a solvent (such as deionized water) to form a negative slurry, coating a negative current collector with the negative slurry, and performing steps such as drying and cold calendering to obtain the negative electrode plate.

### Positive electrode plate

In some embodiments, the electrode plate according to this application may be a positive electrode plate. The positive electrode plate includes a positive current collector and a positive electrode material layer that overlays at least one surface of the positive current collector. The positive electrode material layer includes the compound represented by Formula (I) according to the first aspect of this application.

In some embodiments, the positive electrode plate may include the compound represented by Formula (I) in any amount suitable for making pores in the electrode plate. In some embodiments, optionally, the electrode material layer of the positive electrode plate includes the compound represented by Formula (I) at a weight percent of 0.1 wt% to 20 wt%, and optionally 0.2 wt% to 10 wt%, based on the total weight of the electrode material layer.

As an example, the positive current collector includes two surfaces opposite to each other in a thickness direction thereof. The positive electrode material layer is disposed on either or both of the two opposite surfaces of the positive current collector.

In some embodiments, the positive current collector may be a metal foil or a composite current collector. For example, the metal foil may be an aluminum foil. The composite current collector may include a polymer material substrate and a metal layer formed on at least one surface of the polymer material substrate. The composite current collector may be formed by overlaying the polymer material substrate with a metal material (for example, aluminum, aluminum alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

In some embodiments, the positive electrode material layer includes a positive active material. The positive active material may be a positive active material well known in the art for use in a battery. As an example, the positive active material may include at least one of the following materials: olivine-structured lithium-containing phosphate, lithium transition metal oxide, and a modified compound thereof. However, this application is not limited to such materials, and other conventional materials usable as a positive active material of a battery may be used instead. One of the positive active materials may be used alone, or at least two thereof may be used in combination. Examples of the lithium transition metal oxide may include, but without being limited to, at least one of lithium cobalt oxide (such as LiCoO₂), lithium nickel oxide (such as LiNiO₂), lithium manganese oxide (such as LiMnO₂ and LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (briefly referred to as NCM333), LiNi_{0.5}Co_{0.2}Mn_{0.3}O₂ (briefly referred to as NCM523), LiNi_{0.5}Co_{0.25}Mn_{0.25}O₂ (briefly referred to as NCM211), LiNi_{0.6}Co_{0.2}Mn_{0.2}O₂ (briefly referred to as NCM622), LiNi_{0.8}Co_{0.1}Mn_{0.1}O₂ (briefly referred to as NCM811)), lithium nickel cobalt aluminum oxide (such as LiNi_{0.85}Co_{0.15}Al_{0.05}O₂), or a modified compound thereof. Examples of the olivine-structured lithium-containing phosphate may include, but without being limited to, at least one of lithium iron phosphate (such as LiFePO₄ (briefly referred to as LFP)), a composite of lithium iron phosphate and carbon, lithium manganese phosphate (such as LiMnPO₄), a composite of lithium manganese phosphate and carbon, lithium manganese iron phosphate, or a composite of lithium manganese iron phosphate and carbon.

In some embodiments, the positive electrode material layer further optionally includes a binder. As an example, the binder may include at least one of polyvinylidene difluoride (PVDF), polytetrafluoroethylene (PTFE), poly(vinylidene fluoride-co-tetrafluoroethylene-co-propylene), poly (vinylidene fluoride-co-hexafluoropropylene-co-tetrafluoroethylene), poly(tetrafluoroethylene-co-hexafluoropropylene), or fluorinated acrylate resin.

In some embodiments, the positive electrode material layer further optionally includes a conductive agent. As an example, the conductive agent may include at least one of superconductive carbon, acetylene black, carbon black, Ketjen black, carbon dots, carbon nanotubes, graphene, or carbon nanofibers.

In some embodiments, the positive electrode plate may be prepared according to the following method: dispersing the ingredients of the positive electrode plate such as the positive active material, the conductive agent, the binder, and any other ingredients into a solvent (such as N-methyl-pyrrolidone) to form a positive slurry, coating a positive current collector with the positive slurry, and performing steps such as drying and cold calendering to obtain the positive electrode plate.

A second aspect of this application provides a method for preparing an electrode plate, including:
(1) dry-mixing an active material, a conductive agent, and a compound represented by Formula (I) to form a dry mixture, and mixing the dry mixture with water and a binder at a first temperature lower than 35 °C to obtain an electrode material slurry: 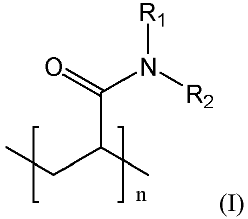 where, R₁, R₂, and n are as defined above; and
(2) applying the electrode material slurry onto at least one surface of a current collector, and drying the slurry to obtain an electrode plate.

As used herein, the term "dry mixture" means a mixture obtained by mixing ingredients of the mixture without a solvent.

The above technical solution provides a method for manufacturing an electrode plate according to this application. In the method disclosed in this application, by using the compound represented by Formula (I) as a pore-forming agent, this application improves the porosity, uniformity, and consistency of pores in the electrode plate, and improves the performance of the electrode plate in being infiltrated by the electrolytic solution and the performance of retaining the electrolytic solution, thereby improving the cycle performance, power performance, and the like of the electrode plate and a battery containing the electrode plate.

In some embodiments, the electrode material slurry may be applied onto at least one surface of the current collector by any conventional means in the art, including but not limited to, by coating.

In some embodiments, a solid content of the electrode material slurry is 40 wt% to 70 wt%, optionally 40 wt% to 65 wt%, and further optionally 45 wt% to 60 wt%, based on a total weight of the electrode material slurry.

In the method for preparing an electrode plate according to this application, the pore-forming effect of the compound represented by Formula (I) as a pore-forming agent can be controlled and improved by controlling the solid content of the slurry. When the solid content falls within the above range, the drying time of the electrode plate falls within a desired range, and the water content allows the compound represented by Formula (I) to blend with the water to form an appropriate amount of hydrogen bonds, thereby achieving an appropriate volume change rate of the compound during the drying, and generating appropriately sized and stably structured pores in the electrode plate.

In some embodiments, the electrode material slurry includes the compound represented by Formula (I) at a weight percent of 0.1 wt% to 20 wt%, optionally 0.15 wt% to 15 wt%, and further optionally 0.2 wt% to 10 wt%, based on the dry weight of the electrode material slurry composition.

As used herein, the term "dry weight" means the total weight of all substances (or, all dry substances) net of the solvent (such as water) in the electrode material slurry.

The pore-forming effect can be controlled and improved by controlling the weight percent of the pore-forming agent compound represented by Formula (I). Specifically, by controlling the content of the compound represented by Formula (I) in the slurry to fall within the above range, this application achieves a good pore-forming effect: the number of pores in the resultant electrode material layer is appropriate, and the pore structure is stable (that is, the pores are not prone to break in the subsequent cold pressing, where the breakage of the pores causes the porosity to decrease again). In addition, the above content range of the compound represented by Formula (I) allows the coating weight of the active material in the electrode plate to fall within a reasonable range, thereby making the energy density of the battery cell meet expectations.

In some embodiments, the first temperature is a room temperature. In some embodiments, the first temperature is 20 °C to 30 °C, optionally 22 °C to 28 °C, and further optionally 25 °C. With the first temperature falling within such a range, the compound represented by Formula (I) can be dissolved in water due to high hydrophilicity during preparation of the slurry, and in turn, can be uniformly distributed in the slurry and the resultant electrode material layer, so as to achieve the purpose of uniform pore formation.

In some embodiments, the drying is performed at any temperature. In some embodiments, the drying is performed at a temperature above 45 °C. In some embodiments, the drying is performed at 90 °C to 150 °C, further optionally at 115 °C to 145 °C, and desirably at 125 °C to 135 °C. With the drying temperature falling within the above range, a desirable drying speed is achieved. The desired pore-forming process is implemented while the production efficiency is satisfactory. The resultant electrode plate is more structurally stable, and the pores in the electrode plate are more uniform, so that the performance of the electrode plate is higher.

In some embodiments, optionally, the water is deionized water. In this way, the residue of impurities in the electrode plate can be reduced to prevent the residue of impurities from adversely affecting the electrochemical performance of the electrode plate.

In some embodiments, the prepared electrode plate is a negative electrode plate.

In some embodiments, the active material is at least one selected from the following materials: artificial graphite, natural graphite, soft carbon, hard carbon, silicon-based material, tin-based material, and lithium titanium oxide. By further selecting the negative active material, this application further enhances the performance of the negative electrode plate.

A third aspect of this application provides a use of a compound represented by Formula (I) as a pore-forming agent:

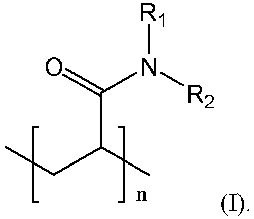

In the formula above, R₁, R₂, and n are as defined above.

In this way, this application provides a use of a compound represented by Formula (I) as a pore-forming agent. When the compound is used as a pore-forming agent, the operation is simple, the process is environmentally friendly, the resultant porosity is high, and the pores are distributed uniformly.

In some embodiments, the compound represented by Formula (I) of this application may be configured to make pores for a positive electrode plate and a negative electrode plate, and make pores for a separator material.

In some embodiments, the pore-forming agent is configured to form pores in the electrode material layer of the electrode plate.

In some embodiments, the electrode plate is a negative electrode plate.

The compound represented by Formula (I) is added as a pore-forming agent in the slurry of an electrode plate (especially a negative electrode plate). The pores are made by manipulating the characteristics of the compound that is soluble in a solvent (such as water) and that shrinks in volume when heated during the coating. In this way, uniform pores are formed in the finally obtained electrode plate to increase the porosity of the electrode plate. In addition, the compound remains in the electrode material layer after the pores are formed. The hydrophobicity of the compound produces an affinity between the compound and the electrolytic solution, thereby improving the performance of the electrode plate in being infiltrated by the electrolytic solution. Moreover, the compound swells after being infiltrated by the electrolytic solution, thereby further improving the capacity of the electrode plate in retaining the electrolytic solution, and in turn, improving the cycle performance of the lithium-ion battery.

A fourth aspect of this application provides a secondary battery. The secondary battery includes the electrode plate according to the first aspect of this application or an electrode plate prepared by the preparation method according to the second aspect of this application.

A fifth aspect of this application provides a battery module. The battery module includes the secondary battery according to the fourth aspect of this application.

A sixth aspect of this application provides a battery pack. The battery pack includes the battery module according to the fifth aspect of this application.

A seventh aspect of this application provides an electrical device. The electrical device includes at least one of the secondary battery according to the fourth aspect of this application, the battery module according to the fifth aspect of this application, or the battery pack according to the sixth aspect of this application.

Next, a secondary battery, a battery module, a battery pack, and an electrical device according to this application are described below in detail with due reference to drawings.

Generally, the secondary battery includes a positive electrode plate, a negative electrode plate, an electrolyte, and a separator. In a charge-and-discharge cycle of the battery, active ions are shuttled between the positive electrode plate and the negative electrode plate by intercalation and deintercalation. The electrolyte serves to conduct ions between the positive electrode plate and the negative electrode plate. Disposed between the positive electrode plate and the negative electrode plate, the separator primarily serves to prevent a short circuit between the positive electrode plate and the negative electrode plate while allowing passage of ions.

### Electrolyte

The electrolyte serves to conduct ions between the positive electrode plate and the negative electrode plate. The type of the electrolyte is not particularly limited in this application, and may be selected as required. For example, the electrolyte may be in a liquid state or gel state, or all solid state.

In some embodiments, the electrolyte is an electrolytic solution. The electrolytic solution includes an electrolyte salt and a solvent.

In some embodiments, the electrolyte salt may be at least one selected from lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluoro(oxalato)borate, lithium bis(oxalato)borate, lithium difluoro(bisoxalato)phosphate, and lithium tetrafluoro(oxalato)phosphate.

In some embodiments, the solvent may be at least one selected from ethylene carbonate, propylene carbonate, ethyl methyl carbonate, diethyl carbonate, dimethyl carbonate, dipropyl carbonate, methyl propyl carbonate, ethylene propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methyl sulfone, and (ethylsulfonyl)ethane.

In some embodiments, the electrolytic solution further optionally includes an additive. For example, the additive may include a negative film-forming additive or a positive film-forming additive. The additive may further include an additive capable of improving specified performance of the battery, for example, an additive for improving overcharge performance of the battery, or an additive for improving high- or low-temperature performance of the battery.

### Separator

In some embodiments, the secondary battery further includes a separator. The type of the separator is not particularly limited in this application, and may be any well-known porous separator that is highly stable both chemically and mechanically.

In some embodiments, the separator may be made of a material that is at least one selected from glass fiber, non-woven fabric, polyethylene, polypropylene, and polyvinylidene difluoride. The separator may be a single-layer film or a multilayer composite film, without being particularly limited. When the separator is a multilayer composite film, materials in different layers may be identical or different, without being particularly limited.

In some embodiments, the positive electrode plate, the negative electrode plate, and the separator may be made into an electrode assembly by winding or stacking.

In some embodiments, the secondary battery may include an outer package. The outer package may be configured to package the electrode assembly and the electrolyte.

In some embodiments, the outer package of the secondary battery may be a hard shell such as a hard plastic shell, an aluminum shell, a steel shell, or the like. Alternatively, the outer package of the secondary battery may be a soft package such as a pouch-type soft package. The soft package may be made of plastic such as polypropylene, polybutylene terephthalate, or polybutylene succinate.

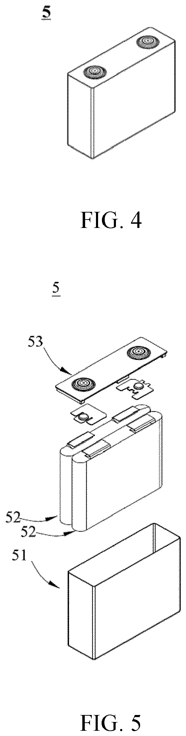

The shape of the secondary battery is not particularly limited in this application, and may be cylindrical, prismatic or any other shape. FIG. 4 shows a prismatic secondary battery 5 as an example.

In some embodiments, referring to FIG. 5, the outer package may include a housing 51 and a cover plate 53. The housing 51 may include a bottom plate and a side plate connected to the bottom plate. The bottom plate and the side plate close in to form an accommodation cavity. An opening that communicates with the accommodation cavity is made on the housing 51. The cover plate 53 can fit and cover the opening to close the accommodation cavity. The positive electrode plate, the negative electrode plate, and the separator may be made into the electrode assembly 52 by winding or stacking. The electrode assembly 52 is packaged in the accommodation cavity. The electrolytic solution infiltrates in the electrode assembly 52. The number of electrode assemblies 52 in a secondary battery 5 may be one or more, and may be selected by a person skilled in the art as actually required.

In some embodiments, the secondary battery may be assembled into a battery module. The battery module may include one or more secondary batteries, and the specific number of secondary batteries in a battery module may be selected by a person skilled in the art depending on practical applications and capacity of the battery module.

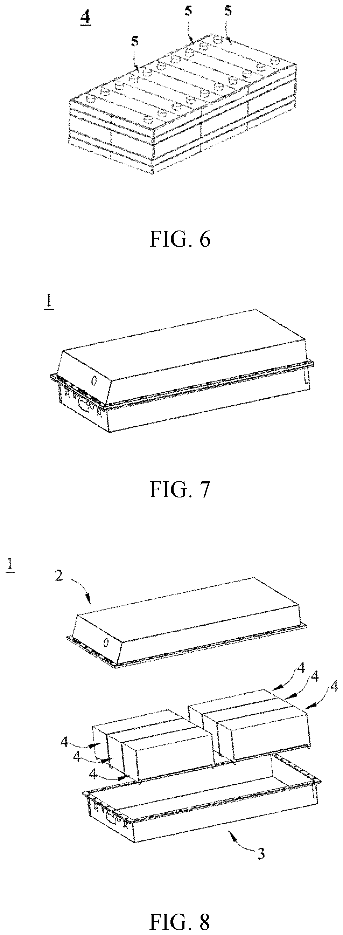

FIG. 6 shows a battery module 4 as an example. Referring to FIG. 6, in the battery module 4, a plurality of secondary batteries 5 may be arranged sequentially along a length direction of the battery module 4. Alternatively, the secondary batteries may be arranged in any other manner. Further, the plurality of secondary batteries 5 may be fixed by a fastener.

Optionally, the battery module 4 may further include a shell that provides an accommodation space. The plurality of secondary batteries 5 are accommodated in the accommodation space.

In some embodiments, the battery module may be assembled to form a battery pack. The battery pack may include one or more battery modules, and the specific number of battery modules in a battery pack may be selected by a person skilled in the art depending on practical applications and capacity of the battery pack.

FIG. 7 and FIG. 8 show a battery pack 1 as an example. Referring to FIG. 7 and FIG. 8, the battery pack 1 may include a battery box and a plurality of battery modules 4 disposed in the battery box. The battery box includes an upper box 2 and a lower box 3. The upper box 2 fits the lower box 3 to form a closed space for accommodating the battery modules 4. The plurality of battery modules 4 may be arranged in the battery box in any manner.

Further, this application provides an electrical device. The electrical device includes at least one of the secondary battery, the battery module, or the battery pack according to this application. The secondary battery, the battery module, or the battery pack may be used as a power supply of the electrical device, or used as an energy storage unit of the electrical device. The electrical device may include, but without being limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

The secondary battery, the battery module, or the battery pack may be selected for use in the electrical device according to practical requirements of the electrical device.

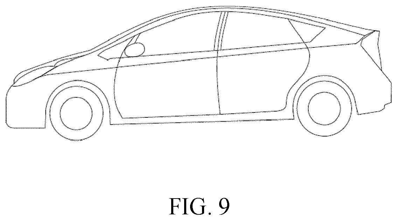

FIG. 9 shows an electrical device as an example. The electrical device may be a battery electric vehicle, a hybrid electric vehicle, a plug-in hybrid electric vehicle, or the like. The electrical device may adopt a battery pack or a battery module in order to meet the requirements of the electrical device on a high power and a high energy density of the secondary battery.

In another example, the device may be a mobile phone, a tablet computer, a notebook computer, or the like. The device is generally required to be thin and light, and may have a secondary battery as a power supply.

### Embodiments

The following describes some embodiments of this application. The embodiments described below are illustrative, and are merely intended to construe this application but not to limit this application. Unless techniques or conditions are expressly specified in an embodiment hereof, the techniques or conditions described in the literature in this field or in an instruction manual of the product are applicable in the embodiment. A reagent or instrument used herein without specifying a manufacturer is a conventional product that is commercially available in the market.

### Embodiments 1 to 5

### Preparing a negative electrode plate

Dry-mix graphite, carbon black as a conductive agent, and the compound represented by Formula (I) and used as a pore-forming agent (shown in Table 1 below) at a weight ratio of 96: 1: 2, add deionized water, adjust the solid content to 55 wt%, add styrene-butadiene rubber (SBR) as a binder at a weight percent of 1 wt%, and stir well to obtain a negative electrode material slurry. Subsequently, coat a current collector copper foil with the negative electrode material slurry in an amount of 12 mg/cm², dry the slurry at a temperature of 130 °C±5 °C, and perform cold pressing and slitting to obtain a negative electrode plate.

**Table 1 Compound represented by Formula (I) as a pore-forming agent in Embodiments 1 to 5**

| Embodiment | Compound represented by Formula (I) | Source |
|---|---|---|
| 1 | Poly(N-isopropyl acrylamide) | Hubei Shixing Chemical Co., Ltd. |
| 2 | Poly(N-ethyl acrylamide) | Shanghai Aladdin Bio-Chem Technology Co., Ltd. |
| 3 | Poly(N-allyl acrylamide) | Shanghai Yihe Biological Technology Co., Ltd. |
| 4 | Poly(N-methylol acrylamide) | Shanghai Yuanye Bio-Technology Co., Ltd. |
| 5 | Poly(N-(p-hydroxyphenyl)acrylamide) | Shenzhen Atomax Chemicals Co., Ltd. |

### Preparing a positive electrode plate

Mix well a positive nickel-cobalt-manganese ternary material LiNi_{0.5}Co_{0.2}Mn_{0.3}O₂, carbon black as a conductive agent, and polyvinylidene difluoride (PVDF) as a binder at a weight ratio of 96: 2.5: 1.5, add N-methyl-pyrrolidone (NMP) as a solvent, adjust the solid content to 70 wt% to 80 wt%, and stir well to obtain a positive slurry. Subsequently, coat a current collector aluminum foil with the positive slurry in an amount of 20 mg/cm², and then perform drying, cold pressing, and slitting to obtain a positive electrode plate.

### Preparing a secondary battery

1. Preparing an electrolytic solution: Mix ethylene carbonate (EC) and ethyl methyl carbonate (EMC) well at a volume ratio of 3: 7, and then add LiPF₆ into the mixture to make the final concentration of the LiPF₆ be 12.5 wt%. Stir well to obtain an electrolytic solution.
2. Preparing a battery: Wind the negative and positive electrode plates prepared above and a 12 µm-thick PP separator to form an electrode assembly, and package the electrode assembly in an aluminum plastic film to form a dry cell. Perform steps such as electrolyte injection, chemical formation, and aging on the dry cell to obtain a secondary battery.

### Embodiments 6 to 14

In Embodiments 6 to 14, the poly(N-isopropyl acrylamide) in Embodiment 1 is used as a pore-forming agent, and the electrode plate and the secondary battery are prepared according to Embodiment 1. The difference from Embodiment 1 lies in the number n of polymerized units of the poly(N-isopropyl acrylamide), as detailed in Table 3 below.

### Embodiments 15 to 22

In Embodiments 15 to 22, the poly(N-isopropyl acrylamide) in Embodiment 1 is used as a pore-forming agent, and the electrode plate and the secondary battery are prepared according to Embodiment 1. The weight ratio between graphite, carbon black, and the pore-forming agent is shown in Table 2 below.

**Table 2 Weight ratio between graphite, carbon black, and pore-forming agent in embodiments**

| Embodiment | Graphite: carbon black: pore-forming agent (weight ratio) |
|---|---|
| 15 | 97.95: 1: 0.05 |
| 16 | 97.9: 1: 0.1 |
| 17 | 97.8: 1: 0.2 |
| 18 | 91: 1: 7 |
| 19 | 88: 1: 10 |
| 20 | 83: 1: 15 |
| 21 | 68: 1: 20 |
| 22 | 63: 1: 25 |

### Embodiments 23 to 30

In Embodiments 22 to 29, the poly(N-isopropyl acrylamide) in Embodiment 1 is used as a pore-forming agent, and the electrode plate and the secondary battery are prepared according to Embodiment 1. The difference from Embodiment 1 lies in the solid content of the negative electrode material slurry, as detailed in Table 3 below.

### Comparative Embodiment C1

### Preparing a negative electrode plate

Dry-mix graphite as an active material and carbon black as a conductive agent at a weight ratio of 98: 1, add deionized water, adjust the solid content to 55 wt%, add styrene-butadiene rubber as a binder at a weight percent of 1 wt%, and stir well to obtain a negative slurry. Subsequently, coat a current collector copper foil with the negative slurry in an amount of 12 mg/cm², dry the slurry at a temperature of 130 °C±5 °C, and perform cold pressing and slitting to obtain a negative electrode plate.

The positive electrode plate and the secondary battery are prepared according to the relevant steps in Embodiment 1.

### Comparative Embodiment C2

### Preparing a negative electrode plate

Prepare a negative electrode plate according to the steps in Embodiment 1 by using ammonium carbonate as a pore-forming agent.

The positive electrode plate and the secondary battery are prepared according to the relevant steps in Embodiment 1.

The negative electrode plate and secondary battery obtained in Embodiments 1 to 30 and Comparative Embodiments C1 and C2 are subjected to a performance test. The test method is as follows:

### Testing the electrode plate

### 1. Testing the porosity

Cut an electrode plate under test into rectangular specimens with a length and a width. Measure an apparent volume V₁ of a specimen, and calculate the apparent volume as V₁ = S × d, where S is the area of the specimen in cm² calculated by multiplying length by width, and d is the thickness of the specimen in cm measured directly. Measure the true volume V₂ (in cm³) of the specimen precisely by means of helium replacement by using a AccuPyc II1340 true density tester based on the Archimedes' principle and the Bohr's law (PV = nRT) with reference to the porosity test method described in GB/T 24586-2009, and calculate the porosity of the specimen under test as p = (V₁ - V₂)/V₁ × 100%.

### 2. Testing the electrolyte absorption speed

Dry an electrode plate under test at 100 °C for 30 minutes, and then cut the electrode plate into square specimens of 5 cm × 5 cm in size. Fix a specimen onto a specimen holder. Suck the electrolytic solution prepared in Embodiment 1 (with a density ρ being 1.6 g/cm³) by using a capillary with an inside diameter of d = 200 µm. The liquid level height of the electrolytic solution sucked into the capillary is h = 3 mm. Before the test starts, clamp the capillary above the electrode plate, with the capillary having sucked the electrolytic solution. Leave the capillary to be perpendicular to the electrode plate, and direct the lower end of the capillary toward the electrode material layer. After the test starts, keep the capillary perpendicular, move the capillary down gradually until the capillary just contacts the electrode material layer. Stop moving the capillary and start timing with a stopwatch. Observe the drop of the liquid level in the capillary by using a Dino-Lite Edge Digital Microscope (Model: AM7115MZT). Read the time t when the liquid level drops to the opening at the lower end of the capillary. Calculate the electrolyte absorption speed v of a single electrode plate as v = π × (d/2)² × h × ρ/t (π is the circumference ratio).

Test n (n ≥ 3) parallel specimens in the way above, and then calculate an average value.

### 3. Observing the morphological cross-section of the electrode plate

Cut an electrode plate to obtain specimens with a pair of scissors, each specimen being 5 mm × 5 mm in size. Stick a specimen onto a specimen holder to which a conductive adhesive has adhered. Photograph the morphological cross-section of the specimen by using a Zeiss sigma300 scanning electron microscope. The parameters of the microscope are: mode: In-lens, voltage: 10 KV, optical stop: 30 µm, working distance: 4.5 mm. Test process: Move the specimen while observing the specimen at a magnification of × 100 or so. Select, after confirming that there is no obvious abnormality in the specimen as a whole, two fields-of-view randomly to take pictures at a desired magnification.

### 4. Testing composition of the electrode material layer

Take a negative electrode plate prepared by the method according to an embodiment, scrape off the electrode material layer, and test the electrode plate material by means of infrared spectroscopy based on GB/T6040-2002 to confirm that the material contains the compound represented by Formula (I).

### Testing the performance of a secondary battery

### 1. Testing the performance of discharging at a high rate

### (1) 4 C discharge capacity

Charge the secondary battery in each embodiment and comparative embodiment at a constant-current rate of 1 C at 25 °C until a charge cut-off voltage of 4.35 V, and then charge the battery at a constant voltage until the current is less than or equal to 0.05 C. Leave the battery to stand for 10 minutes, and then discharge the battery at a constant-current rate of 4 C until a discharge cut-off voltage of 2.8 V. Record a discharge capacity C_{4C}.

### (2) 1 C discharge capacity

Charge the secondary battery at a constant-current rate of 1 C at 25 °C until a charge cut-off voltage of 4.35 V, and then charge the battery at a constant voltage until the current is less than or equal to 0.05 C. Leave the battery to stand for 10 minutes, and then discharge the battery at a constant-current rate of 1 C until a discharge cut-off voltage of 2.8 V. Record a discharge capacity C_{1C}.

### (3) Calculate the high-rate discharge capacity retention rate of the battery cell as: high-rate discharge capacity retention rate = C_{4C}/C_{1C} × 100%.

### 2. Testing the cycle performance

Charge the secondary battery in each embodiment and comparative embodiment at a constant-current rate of 1 C at 25 °C until a charge cut-off voltage of 4.30 V, and then charge the battery at a constant voltage until the current is less than or equal to 0.05 C. Leave the battery to stand for 10 minutes, and then discharge the battery at a constant-current rate of 1 C until a discharge cut-off voltage of 3.3 V. Leave the battery to stand for 10 minutes, thereby completing one charge-and-discharge cycle (that is, 1 cycle). Record a discharge capacity C₁. Carry out charge-and-discharge cycling test on the battery for 1000 cycles (cls) according to the above method. Record the corresponding discharge capacity C₁₀₀₀, and calculate the discharge capacity retention rate as discharge capacity retention rate = C₁₀₀₀/C₁ × 100%.

### 3. Testing the direct-current resistance (DCR) of the battery

Charge a battery under test at a constant current of 1/3 C at 25 °C until a voltage of 4.3 V, and then charge the battery at a constant voltage of 4.3 V until the current reaches 0.05 C. Leave the battery to stand for 5 minutes, and record the voltage V₁. Subsequently, discharge the battery at a current of 1/3 C for 30 seconds, and record the voltage V₂. Calculate the internal resistance of the battery as DCR = (V₂ - V₁)/(1/3 C).

The test results are as follows:

### 1. Morphological cross-section of the electrode plate

FIG. 1 shows a parallel comparison of the morphological cross-section of the negative electrode plate between Embodiment 1 and Comparative Embodiment C1.

First, the comparison shows that the pores in the electrode material layer of the negative electrode plate in Embodiment 1 are significantly larger than those in Comparative Embodiment C1.

Second, FIG. 1 also shows that, compared with the electrode plate in Comparative Embodiment C1, the pores in the electrode material layer in Embodiment 1 are relatively uniform and consistent. Specifically, in the electrode plate in Embodiment 1, the distribution of pores in a direction perpendicular to the current collector (located at the bottom of the image) is relatively uniform, and the porosity and the pore size are basically consistent between the upper side and the lower side. By contrast, in the electrode plate in Comparative Embodiment C1, the pores are relatively small and nonuniform.

This shows that, by adding the compound represented by Formula (I) as a pore-forming agent according to this application, a desirable pore-forming effect is achieved-the porosity of the electrode plate is increased, the pores in the electrode plate are relatively large and distributed uniformly.

### 2. Composition of the electrode plate

As verified by infrared spectrometry, the electrode material layer of the electrode plate prepared by the method according to Embodiment 1 contains the compound represented by Formula (I). A characteristic peak of the compound, that is, an amide C=O stretching vibration peak exists at 1600 to 1700 cm⁻¹.

### 3. Performance test results of the electrode plate and the secondary battery

Table 3 shows the test results of the electrode plates and the secondary batteries in Embodiments 1 to 30 and the comparative embodiment.

**Table 3 Test results of electrode plates and batteries in embodiments and comparative embodiment.**

| Embod iment | R₁ | R₂ | Number n of polymerize d units | Weight percent of pore-forming agent (wt%) | Solid content of slurry (wt%) | Porosity | Electrolyte absorption speed (µg/s) | DCR (mΩ) | Discharge capacity retention rate of battery discharged at 4 C at 25 °C | Cycle capacity retention rate of battery cycled at 25 °C for 1000 cycles |
|---|---|---|---|---|---|---|---|---|---|---|
| C1 | / | / | / | / | 55 | 21.3% | 1.3 | 0.92 | 76.3% | 83.4% |
| C2 | / | / | / | / | 55 | 35.8% | 1.8 | 0.86 | 78.5% | 85.6% |
| 1 | -CH(CH₃)₂ | H | 1000 | 2.0 | 55 | 36.3% | 2.5 | 0.63 | 85.2% | 91.3% |
| 2 | -C₂H₅ | H | 1000 | 2.0 | 55 | 35.2% | 2.4 | 0.65 | 84.3% | 91.0% |
| 3 | -C₃H₅ | H | 1000 | 2.0 | 55 | 34.4% | 2.3 | 0.68 | 84.0% | 89.7% |
| 4 | -CH₂OH | H | 1000 | 2.0 | 55 | 28.5% | 2.1 | 0.70 | 83.5% | 90.2% |
| 5 | -C₆H₄OH | H | 1000 | 2.0 | 55 | 22.5% | 1.4 | 0.91 | 76.5% | 83.6% |
| 6 | -CH(CH₃)₂ | H | 50 | 2.0 | 55 | 21.6% | 1.3 | 0.91 | 77.0% | 84.5% |
| 7 | -CH(CH₃)₂ | H | 100 | 2.0 | 55 | 29.2% | 2.0 | 0.69 | 83.2% | 88.2% |
| 8 | -CH(CH₃)₂ | H | 75 | 2.0 | 55 | 22.8% | 1.4 | 0.89 | 77.5% | 86.1% |
| 9 | -CH(CH₃)₂ | H | 500 | 2.0 | 55 | 35.2% | 2.1 | 0.67 | 84.2% | 89.2% |
| | | | | | | | | | | |
| 10 | -CH(CH₃)₂ | H | 1500 | 2.0 | 55 | 35.8% | 2.4 | 0.64 | 85.0% | 90.8% |
| 11 | -CH(CH₃)₂ | H | 2000 | 2.0 | 55 | 33.0% | 2.2 | 0.70 | 83.5% | 90.3% |
| 12 | -CH(CH₃)₂ | H | 5000 | 2.0 | 55 | 30.2% | 1.9 | 0.86 | 81.8% | 87.9% |
| 13 | -CH(CH₃)₂ | H | 6000 | 2.0 | 55 | 28.5% | 1.8 | 0.86 | 81.7% | 87.8% |
| 14 | -CH(CH₃)₂ | H | 10000 | 2.0 | 55 | 24.5% | 1.6 | 0.88 | 80.2% | 86.2% |
| 15 | -CH(CH₃)₂ | H | 1000 | 0.05 | 55 | 20.5% | 1.1 | 0.93 | 76.0% | 83.0% |
| 16 | -CH(CH₃)₂ | H | 1000 | 0.1 | 55 | 22.1% | 1.5 | 0.88 | 78.5% | 85.3% |
| 17 | -CH(CH₃)₂ | H | 1000 | 0.2 | 55 | 26.0% | 1.8 | 0.85 | 79.2% | 87.6% |
| 18 | -CH(CH₃)₂ | H | 1000 | 7 | 55 | 34.9% | 2.4 | 0.66 | 84.1% | 90.5% |
| 19 | -CH(CH₃)₂ | H | 1000 | 10.0 | 55 | 33.5% | 2.3 | 0.67 | 83.0% | 89.7% |
| 20 | -CH(CH₃)₂ | H | 1000 | 15 | 55 | 25.3% | 1.7 | 0.86 | 78.6% | 85.8% |
| 21 | -CH(CH₃)₂ | H | 1000 | 20 | 55 | 24.2% | 1.6 | 0.88 | 78.3% | 85.4% |
| 22 | -CH(CH₃)₂ | H | 1000 | 25 | 55 | 21.0% | 1.2 | 0.93 | 76.1% | 83.2% |
| 23 | -CH(CH₃)₂ | H | 1000 | 2.0 | 30 | 20.2% | 1.1 | 0.93 | 75.8% | 82.8% |
| 24 | -CH(CH₃)₂ | H | 1000 | 2.0 | 40 | 29.7% | 1.9 | 0.83 | 81.6% | 87.8% |
| 25 | -CH(CH₃)₂ | H | 1000 | 2.0 | 45 | 32.2% | 2.2 | 0.68 | 83.1% | 90.2% |
| 26 | -CH(CH₃)₂ | H | 1000 | 2.0 | 50 | 33.8% | 2.3 | 0.67 | 83.9% | 90.4% |
| 27 | -CH(CH₃)₂ | H | 1000 | 2.0 | 60 | 27.8% | 2.0 | 0.85 | 82.7% | 90.1% |
| 28 | -CH(CH₃)₂ | H | 1000 | 2.0 | 65 | 25.6% | 1.6 | 0.87 | 80.0% | 87.1% |
| 29 | -CH(CH₃)₂ | H | 1000 | 2.0 | 70 | 23.5% | 1.4 | 0.89 | 77.6% | 84.6% |
| 30 | -CH(CH₃)₂ | H | 1000 | 2.0 | 80 | 19.8% | 1.1 | 0.94 | 75.2% | 82.5% |

As can be seen from Table 3, in comparison with Comparative Embodiment C1, the porosity of the negative electrode plate in each embodiment of the present invention is increased, indicating that the added pore-forming agent according to this application can increase the porosity of the electrode plate. In comparison with Comparative Embodiment C1, the discharge capacity retention rate of the battery discharged at a high rate (referring to the column "4 C discharge capacity retention rate" in Table 3) is improved, indicating that after the pores are made by the pore-forming agent according to this application, the porosity of the electrode plate is increased, and the pores are uniform, thereby facilitating conduction of electrolyte ions in the electrode plate, and in turn, improving the rate performance of the battery. From the perspective of the capacity retention rate after 1000 cycles, the cycle performance of the battery doped with the pore-forming agent is also significantly improved in comparison with Comparative Embodiment C1.

In comparison with Comparative Embodiment C2, the electrolyte absorption speed of the electrode plate in an embodiment of this application is increased under the condition that the porosity is basically the same. Evidently, the pore-forming agent according to this application- -the compound represented by Formula (I) still remains in the electrode material layer of the electrode plate after the pores are made, and is capable of "capturing" the electrolytic solution, thereby further improving the effect of a fresh electrode plate in being infiltrated by the electrolytic solution.

In addition, compared with the prior art, the electrode plate according to this application achieves a reduced direct-current resistance (DCR) of a fresh battery.

It is hereby noted that this application is not limited to the foregoing embodiments. The foregoing embodiments are merely examples. Any and all embodiments with substantively the same constituents or exerting the same effects as the technical ideas hereof without departing from the scope of the technical solutions of this application still fall within the technical scope of this application. In addition, all kinds of variations of the embodiments conceivable by a person skilled in the art and any other embodiments derived by combining some constituents of the embodiments hereof without departing from the subject-matter of this application still fall within the scope of this application.

## Claims

1. An electrode plate, comprising a current collector and an electrode material layer disposed on at least one surface of the current collector, wherein the electrode material layer comprises an active material and a conductive agent, and the electrode material layer further comprises a compound represented by Formula (I): 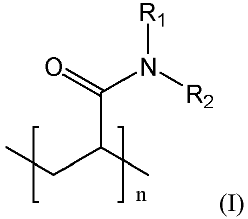 wherein,
R₁ and R₂ each are independently selected from hydrogen, a C₁ to C₆ alkane group, a C₁ to C₆ chain alkoxy group, a C₂ to C₆ alkenyl group, a C₆ to C₂₀ aryl, a hydroxyl group, or an amino group, wherein the alkane group, the chain alkoxy group, the alkenyl group, and the aryl group each are independently optionally substituted by at least one of the following groups: a C₁ to C₃ alkyl group, a C₁ to C₆ alkyl hydroxyl group, a hydroxyl group, an amino group, an amido group, a cyano group, a carboxyl group, and halogen; and
n is an integer ranging from 50 to 10000.

2. The electrode plate according to claim 1, wherein R₁ and R₂ each are independently selected from hydrogen, a C₁ to C₆ alkane group, a C₂ to C₆ alkenyl group, or a phenyl group, wherein the alkane group, the alkenyl group, and the phenyl group each are independently optionally substituted by at least one of the following groups: a C₁ to C₃ alkyl group, a hydroxyl group, or an amino group; optionally, R₁ is selected from a C₁ to C₆ alkane group, a C₂ to C₆ alkenyl group, or a phenyl group, and the alkane group and the phenyl group each are independently optionally substituted by a C₁ to C₃ alkyl or a hydroxy group; and further optionally, R₁ is selected from an ethyl group, an isopropyl group, an allyl group, a hydroxymethyl group, or a p-hydroxyphenyl group; and
R₂ is hydrogen.

3. The electrode plate according to claim 1 or 2, wherein n is an integer ranging from 75 to 5000, and optionally, n is an integer ranging from 100 to 2000.

4. The electrode plate according to any one of claims 1 to 3, wherein the electrode material layer comprises a compound represented by Formula (I) at a weight percent of 0.1 wt% to 20 wt%, and optionally 0.2 wt% to 10 wt%, based on a total weight of the electrode material layer.

5. The electrode plate according to any one of claims 1 to 4, wherein the electrode plate is a negative electrode plate.

6. The electrode plate according to claim 5, wherein the active material is at least one selected from the following materials: artificial graphite, natural graphite, soft carbon, hard carbon, silicon-based material, tin-based material, and lithium titanium oxide.

7. A method for preparing an electrode plate, comprising:
(1) dry-mixing an active material, a conductive agent, and a compound represented by Formula (I) to form a dry mixture, and mixing the dry mixture with water and a binder at a first temperature lower than 35 °C to obtain an electrode material slurry, 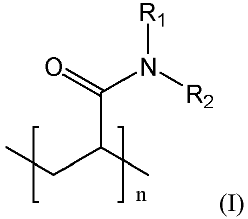 wherein, R₁, R₂, and n are as defined in claim 1; and
(2) applying the electrode material slurry onto at least one surface of a current collector, and drying the slurry to obtain an electrode plate.

8. The preparation method according to claim 7, wherein a solid content of the electrode material slurry is 40 wt% to 70 wt%, optionally 40 wt% to 65 wt%, and further optionally 45 wt% to 60 wt%, based on a total weight of the electrode material slurry.

9. The preparation method according to claim 7 or 8, wherein the electrode material slurry comprises a compound represented by Formula (I) at a weight percent of 0.1 wt% to 20 wt%, optionally 0.15 wt% to 15 wt%, and further optionally 0.2 wt% to 10 wt%, based on a dry weight of the electrode material slurry.

10. The preparation method according to any one of claims 7 to 9, wherein the first temperature is 20 °C to 30 °C, optionally 22 °C to 28 °C, and further optionally 25 °C.

11. The preparation method according to any one of claims 7 to 10, wherein the drying is performed at a temperature higher than 45 °C, optionally at 90 °C to 150 °C, further optionally at 115 °C to 145 °C, and desirably at 125 °C to 135 °C.

12. The preparation method according to any one of claims 7 to 11, wherein the water is deionized water.

13. The preparation method according to any one of claims 7 to 12, wherein the electrode plate is a negative electrode plate.

14. The preparation method according to claim 13, wherein the active material is at least one selected from the following materials: artificial graphite, natural graphite, soft carbon, hard carbon, silicon-based material, tin-based material, and lithium titanium oxide.

15. A use of a compound represented by Formula (I) as a pore-forming agent, 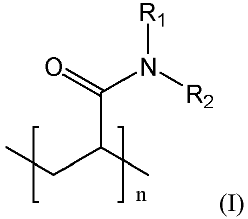 wherein, R₁, R₂ and n are as defined in claim 1.

16. The use according to claim 15, wherein the pore-forming agent is configured to form pores in the electrode material layer of the electrode plate.

17. The use according to claim 16, wherein the electrode plate is a negative electrode plate.

18. A secondary battery, comprising the electrode plate according to any one of claims 1 to 6 or an electrode plate prepared by the preparation method according to any one of claims 7 to 14.

19. A battery module, comprising the secondary battery according to claim 18.

20. A battery pack, comprising the battery module according to claim 19.

21. An electrical device, comprising at least one of the secondary battery according to claim 18, the battery module according to claim 19, or the battery pack according to claim 20.
